(19) Europäisches Patentamt

European Patent Office

Office européen des brevets

(11) EP 1 736 806 A1

(12) EUROPEAN PATENT APPLICATION

(43) Date of publication:
27.12.2006 Bulletin 2006/52

(51) Int Cl.:
G02B 6/02 (2006.01)     H04B 10/18 (2006.01)

(21) Application number: 05291062.7

(22) Date of filing: 17.05.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: ALCATEL
75008 Paris (FR)

(72) Inventors:
• Antona, Jean-Christophe
  92120 Montrouge (FR)

• Bigo, Sébastien
  91300 Massy (FR)

(74) Representative: Wörz, Volker Alfred et al
Dreiss, Fuhlendorf,
Steimle & Becker,
Postfach 10 37 62
70032 Stuttgart (DE)

(54) **Method for determining the performance of a heterogeneous optical transmission system**

(57)    The present invention relates to a method of determining the performance of a heterogeneous optical transmission system, which preferably comprises wavelength division multiplexing (WDM), wherein said heterogeneous optical transmission system comprises a plurality of preferably homogenous optical transmission subsystems (i), characterized by determining a criterion (Φ) for said performance of the heterogeneous optical transmission system depending on a weighted combination of performance criteria ($\Phi^{(i)}$) of said optical transmission subsystems (i).

The present invention further relates to a system for determining the performance of a heterogeneous optical transmission system comprising wavelength division multiplexing (WDM), wherein said heterogeneous optical transmission system comprises a plurality of preferably homogenous optical transmission subsystems (i).

Fig. 2

**Description**

The present invention relates to a method of determining the performance of a heterogeneous optical transmission system, which preferably comprises wavelength division multiplexing (WDM), wherein said heterogeneous optical transmission system comprises a plurality of optical transmission subsystems.

The present invention further relates to a system for determining the performance of a heterogeneous optical transmission system, which preferably comprises wavelength division multiplexing (WDM), wherein said heterogeneous optical transmission system comprises a plurality of optical transmission subsystems.

Methods and systems for assessing the performance of WDM optical transmission systems are per se known from prior art and are used to determine the haul of the system and the required number of amplifiers or OEO (optical-electrical-optical) regenerators.

However, present solutions do not provide for precise performance assessment of heterogeneous WDM transmission systems, i.e. comprising various subsystems each of which uses another type of optical fiber or another fiber length and the like. The lack of accuracy when assessing heterogeneous WDM transmission systems can lead to severely misestimate the haul of the heterogeneous WDM transmission system which results in using too many e.g. OEO regenerators when overestimating system impairments. On the other hand, when underestimating system impairments due to the present solutions' lack of accuracy, this may lead to providing optical links that are not physically feasible.

Consequently, it is an object of the present invention to provide an improved method of and system for determining the performance of a heterogeneous optical transmission system, which overcomes the disadvantages of prior art.

According to the present invention, regarding the above mentioned method this object is solved by determining a criterion for said performance of the heterogeneous optical transmission system depending on a weighted combination of performance criteria of said optical transmission subsystems.

This enables to increase the method's accuracy by selectively considering e.g. a plurality of performance criteria wherein each of said performance criteria so considered relates to one of the subsystems comprised within the heterogeneous optical transmission system.

According to an advantageous embodiment of the present invention, a nonlinear accumulated phase is used as a performance criterion and/or a performance criterion which is proportional to the nonlinear accumulated phase. This performance criterion - as well as other possible performance criteria - may be applied to each of the subsystems of the heterogeneous optical transmission system as well as to the heterogeneous optical transmission system directly. I.e., the performance of a subsystem may be expressed by the nonlinear accumulated phase as well as the performance of the whole heterogeneous optical transmission system comprising a plurality of subsystems.

The performance criterion directed to the nonlinear accumulated phase is e.g. described in: ANTONA, J.-C., BIGO, S., and FAURE, J.-P.: 'Nonlinear cumulated phase as a criterion to assess performance of terrestrial WDM systems'. Proc. OFC'2002, Anaheim, CA, USA, WX5, pp. 365-367.

A performance criterion proportional to a sum of the input power applied to each fiber of an optical transmission subsystem may also be used as a performance criterion.

A further embodiment of the inventive method is characterized by using a performance criterion proportional to

(a)    a sum over the different fiber spans of said subsystem, and/or

(b)    a sum of an input power applied to each fiber span, divided by the effective area of the fiber span, and/or multiplied by a non-linear index the fiber, and/or multiplied by the effective length of the fiber span.

It is also possible to use a performance criterion proportional to a number of fiber spans of said subsystem.

A further very advantageous embodiment of the present invention is characterized by determining said performance criterion as a weighted sum of respective performance criteria of two or more subsystems. Weighting the performance criteria of the subsystems enables to account for different properties of the respective subsystems comprised within said heterogeneous optical transmission system and is far more predictive than prior art methods.

Yet another very advantageous embodiment of the present invention proposes using weighting factors for weighting said performance criteria of said two or more subsystems, wherein said weighting factors depend on non-linear thresholds which correspond to a tolerance to nonlinear effects of the respective subsystem. For instance, the non-linear threshold can refer the value of the performance criterion corresponding to a given tolerable amount of signal distortion, for instance a given amount of penalty, i.e. on an eye opening or on a required OSNR to get a given Bit Error Rate (BER) as defined in the abovementioned article.

According to another embodiment of the present invention, said weighting factors are the inverse of said non-linear thresholds of said subsystem.

According to a further embodiment of the present invention, said non-linear thresholds depend on a fiber dispersion and/or a length of an optical fiber of the respective subsystem and/or attenuation, effective area, non-linear index, a size of the subsystem, a type of a dispersion compensating module used, depending on the chosen criterion.

The non-linear thresholds can e.g. be obtained by means of measurement and/or interpolation.

According to another advantageous embodiment of the present invention, said subsystems comprised within said heterogeneous optical transmission system comprise different sizes, different types of optical fibers and/or different span lengths or numbers of spans.

A further solution to the object of the present invention is given by a system for determining the performance of a heterogeneous optical transmission system comprising wavelength division multiplexing (WDM) according to claim 15.

The inventive method may e.g. be implemented by using a computer system and may also be included to existing optical transmission system design tools.

Further advantages and features of the present invention are given in the following detailed description with reference to the drawings, in which

Fig. 1 depicts a diagram showing the OSNR (optical signal-to-noise ratio) penalty as a function of a prior art performance criterion, and

Fig. 2 depicts a diagram showing the OSNR penalty as a function of a criterion provided by the present invention.

Within a first embodiment of the present invention, a criterion $\Phi$ directed to the nonlinear accumulated phase, which is e.g. described in: ANTONA, J.-C., BIGO, S., and FAURE, J.-P.: 'Nonlinear cumulated phase as a criterion to assess performance of terrestrial WDM systems'. Proc. OFC'2002, Anaheim, CA, USA, WX5, pp. 365-367, is used to assess the performance of a heterogeneous optical transmission system comprising wavelength division multiplexing (WDM).

Said heterogeneous transmission system consists of N many subsystems i=0, .., N-1, each of which can be characterized by a respective performance criterion $\Phi^{(i)}$ describing the nonlinear accumulated phase of the respective subsystem i. That is, the performance criterion of the second subsystem (i=1) is denoted as $\Phi^{(1)}$, and so on.

According to the present invention, the overall performance of the heterogeneous optical transmission system described by the performance criterion $\Phi$ is determined according to

$$\Phi = \sum_{i=0}^{N-1} C^{(i)}\Phi^{(i)} \ .$$

I.e., the performance criterion $\Phi$ describing the overall performance of the heterogeneous optical transmission system comprising the N many subsystems is a weighted sum of the performance criteria $\Phi^{(i)}$ describing the nonlinear accumulated phase of the respective subsystem i.

The weighting factors $C^{(i)}$ depend on non-linear thresholds which correspond to a tolerance to nonlinear effects of the respective subsystem. Said non-linear thresholds e.g. depend on a fiber dispersion and/or a length of an optical fiber and the spacing between two consecutive nodes in a network environment (along with a dependence on the bit rate, a channel spacing, and a modulation format) of the respective subsystem i and they can be determined by means of measurement and/or by interpolation.

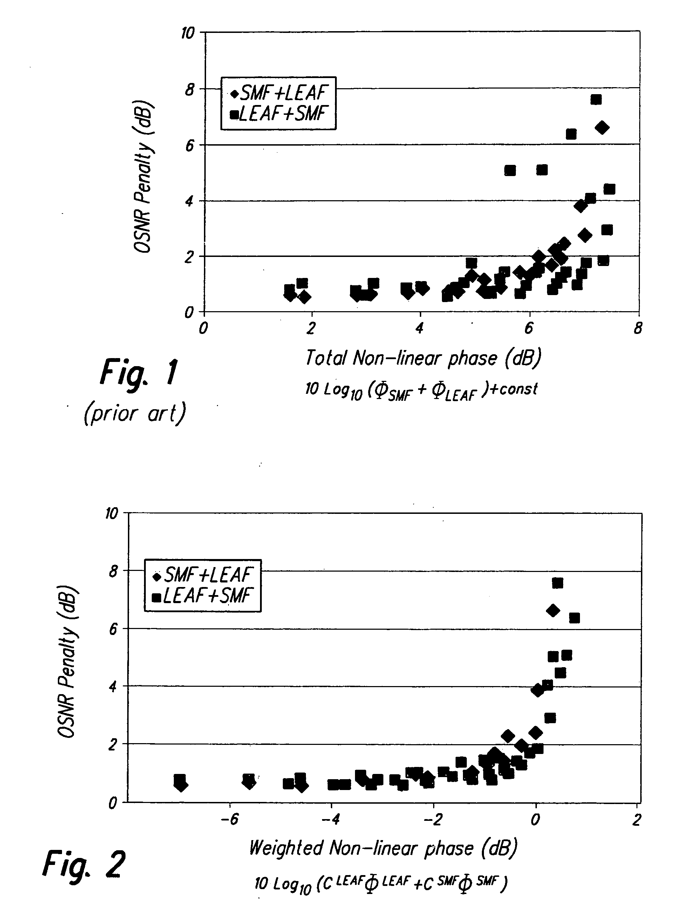

Fig. 1 depicts a diagram showing the OSNR (optical signal-to-noise ratio) penalty of a heterogeneous optical transmission system comprising two subsystems, wherein the OSNR is given depending on a performance criterion of an accumulated non-linear phase obtained by using a prior art method. More precisely, the OSNR penalty of Figure 1 is defined as the differential required OSNR at a receiver end to get a given bit error rate (BER) of 10^(-5) between systems with or without propagation over the link, the reference being with a transmitter and a receiver in a back to back configuration.

The first subsystem comprises a standard single mode optical fiber (SMF), whereas the second subsystem comprises a LEAF-type optical fiber (LEAF).

As can be gathered from the diagram of Fig. 1, the prior art method for determining the performance of said heterogeneous optical transmission system comprising two subsystems SMF, LEAF yields different results for the OSNR penalty depending on the sequence of the two subsystems. That is, the relationship between the OSNR penalty due to non-linear effects and the performance criterion according to prior art

$$\Phi = \Phi_{SMF} + \Phi_{LEAF}$$

is not bi-univocal. Said prior art criterion does therefore not allow to precisely assess the performance of the given heterogeneous optical transmission system comprising two subsystems SMF, LEAF.

In contrast, when using the inventive method providing for a weighted sum of the performance criteria $\Phi_{SMF}$, $\Phi_{LEAF}$ of said subsystems SMF, LEAF, the inventive performance criterion for the heterogeneous optical transmission system comprising said two subsystems SMF, LEAF is obtained as follows:

$$\Phi = \sum_{i=0}^{1} C^{(i)}\Phi^{(i)} = C^{LEAF}\Phi^{LEAF} + C^{SMF}\Phi^{SMF} \; .$$

When using said inventive method to obtain the performance criterion $\Phi$, the relationship between the OSNR penalty due to non-linear effects and the inventive performance criterion $\Phi$ is substantially bi-univocal, cf. Fig. 2, since basically the same values of OSNR penalty are obtained for different values of the inventive performance criterion $\Phi$, regardless the sequence of the subsystems SMF, LEAF.

The weighting factors $C^{LEAF}$, $C^{SMF}$ depend on non-linear thresholds which correspond to a tolerance to nonlinear effects of the respective subsystem LEAF, SMF. Said non-linear thresholds e.g. depend on a fiber dispersion and/or a length of an optical fiber of the respective subsystem i and they can be determined by means of measurement and/or by interpolation.

By using the inventive method it is possible to accurately determine the performance of a heterogeneous optical transmission system comprising a plurality of subsystems which enables to design such a heterogeneous optical transmission system to the lowest cost.

The inventive method can be used to assess the performance of heterogeneous optical transmission systems comprising a plurality of different subsystems each of which exhibits different properties regarding the optical fiber used such as e.g. a dispersion, a length and the like.

It is also possible to generalize the inventive idea of providing a weighted combination of performance criteria to other performance criteria than said nonlinear accumulated phase. For instance, an overall performance criterion regarding the number of optical fiber spans or the sum of input powers applied to fiber sections, or the sum of input powers applied to fiber sections, weighted by effective areas and/or non-linear indexes, and/or effective lengths, may also be obtained by providing a weighted sum of individual subsystems' performance criteria, wherein weighting factors may e.g. depend on dispersion and/or span length and the like.

**Claims**

1. Method of determining the performance of a heterogeneous optical transmission system, which preferably comprises wavelength division multiplexing (WDM), wherein said heterogeneous optical transmission system comprises a plurality of optical transmission subsystems (i), **characterized by** determining a criterion ($\Phi$) for said performance of the heterogeneous optical transmission system depending on a weighted combination of performance criteria ($\Phi^{(i)}$) of said optical transmission subsystems (i).

2. Method according to claim 1, **characterized by** using a nonlinear accumulated phase as a performance criterion and/or a performance criterion which is proportional to the nonlinear accumulated phase.

3. Method according to claim 1 or 2, **characterized by** using a performance criterion proportional to a sum of the input power applied to each fiber of an optical transmission subsystem (i).

4. Method according to one of the preceding claims, **characterized by** using a performance criterion proportional to (a) a sum over the different fiber spans of said subsystem (i), (b) a sum of an input power applied to each fiber span, divided by the effective area of the fiber span, and/or multiplied by a non-linear index of the fiber, and/or multiplied by the effective length of the fiber span.

5. Method according to one of the preceding claims, **characterized by** using a performance criterion proportional to a number of fiber spans of said subsystem (i).

6.  Method according to one of the preceding claims, **characterized by** determining said performance criterion ($\Phi$) as a weighted sum of respective performance criteria ($\Phi^{(i)}$) of two or more subsystems (i).

7.  Method according to claim 6, **characterized by** using weighting factors ($C^{(i)}$) for weighting said performance criteria ($\Phi^{(i)}$) of said two or more subsystems (i), wherein said weighting factors ($C^{(i)}$) depend on non-linear thresholds which correspond to a tolerance to nonlinear effects of the respective subsystem (i).

8.  Method according to claim 7, wherein said weighting factors ($C^{(i)}$) are the inverse of said non-linear thresholds of said subsystem (i).

9.  Method according to claim 7 or 8, wherein said non-linear thresholds depend on a fiber dispersion and/or a length of an optical fiber of the respective subsystem (i).

10. Method according to one of the claims 7 to 9, wherein said non-linear thresholds depend on the number of fibers of the respective subsystem (i).

11. Method according to one of the claims 7 to 10, wherein said non-linear thresholds depend on a dispersion management scheme of the respective subsystem (i).

12. Method according to one of the claims 7 to 11, wherein the non-linear thresholds are obtained by means of measurement and/or interpolation.

13. Method according to one of the preceding claims, wherein said subsystems (i) comprised within said heterogeneous optical transmission system comprise different types of optical fibers and/or different span lengths.

14. Method according to one of the preceding claims, wherein said subsystems (i) comprised within said heterogeneous optical transmission system are separated by optical nodes.

15. System for determining the performance of a heterogeneous optical transmission system, which preferably comprises wavelength division multiplexing (WDM), wherein said heterogeneous optical transmission system comprises a plurality of preferably homogenous optical transmission subsystems (i), **characterized by** being capable of performing the method according to one of the claims 1 to 14.

Fig. 1
(prior art)

OSNR Penalty (dB)

◆ SMF+LEAF
■ LEAF+SMF

Total Non-linear phase (dB)

$10 \, Log_{10} \, (\Phi_{SMF} + \Phi_{LEAF}) + const$

Fig. 2

OSNR Penalty (dB)

◆ SMF+LEAF
■ LEAF+SMF

Weighted Non-linear phase (dB)

$10 \, Log_{10} \, (C^{LEAF} \Phi^{LEAF} + C^{SMF} \Phi^{SMF})$

6

**European Patent Office**

**EUROPEAN SEARCH REPORT**

Application Number

EP 05 29 1062

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | ANTONA J-C ET AL OPTICAL SOCIETY OF AMERICA / INSTITUTE OF ELECTRICAL AND ELECTRONICS ENGINEERS: "Nonlinear cumulated phase as a criterion to assess performance of terrestrial WDM systems" OPTICAL FIBER COMMUNICATION CONFERENCE AND EXHIBIT. (OFC). TECHNICAL DIGEST. POSTCONFERENCE DIGEST. ANAHEIM, CA, MARCH 17 - 22, 2002, TRENDS IN OPTICS AND PHOTONICS SERIES. (TOPS), WASHINGTON, DC : OSA, US, vol. TOPS. VOL. 70, 17 March 2002 (2002-03-17), pages 365-367, XP010617840 ISBN: 1-55752-701-6 * page 366 * | 1-15 | G02B6/16 H04B10/18 |
| A | PENNINCKX D ET AL: "NEW PHYSICAL ANALYSIS OF 10-GB/S TRANSPARENT OPTICAL NETWORKS" IEEE PHOTONICS TECHNOLOGY LETTERS, IEEE INC. NEW YORK, US, vol. 15, no. 5, May 2003 (2003-05), pages 778-780, XP001197307 ISSN: 1041-1135 * page 779 * | 13,14 | |
| X | NASIEVA I ET AL: "Nonlinearity management in fibre links with distributed amplification" ELECTRONICS LETTERS, IEE STEVENAGE, GB, vol. 39, no. 11, 29 May 2003 (2003-05-29), pages 856-857, XP006020367 ISSN: 0013-5194 * page 856 * | 1,3-6, 13,15 | |

TECHNICAL FIELDS SEARCHED (Int.Cl.7)

G02B
H04B

-/--

The present search report has been drawn up for all claims

| Place of search | Date of completion of the search | Examiner |
|---|---|---|
| The Hague | 12 July 2005 | Bourhis, J-F |

**European Patent Office**

**EUROPEAN SEARCH REPORT**

Application Number

EP 05 29 1062

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CARENA A ET AL: "Comparison between different configurations of hybrid raman/erbium-doped fiber amplifiers" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, WASHINGTON, WA : OSA, US, vol. 2, 17 March 2001 (2001-03-17), pages TUA3-1-TUA3-3, XP010545729 ISBN: 1-55752-655-9 * pages TUA3-2 * ----- | 1,2 | |
| A | PECCI P ET AL: "Tolerance to dispersion compensation parameters of six modulation formats in systems operating at 43 Gbit&sol;s" ELECTRONICS LETTERS, IEE STEVENAGE, GB, vol. 39, no. 25, 11 December 2003 (2003-12-11), pages 1844-1846, XP006024561 ISSN: 0013-5194 * the whole document * ----- | 1-6, 13-15 | TECHNICAL FIELDS SEARCHED (Int.Cl.7) |

The present search report has been drawn up for all claims

| Place of search | Date of completion of the search | Examiner |
|---|---|---|
| The Hague | 12 July 2005 | Bourhis, J-F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANTONA, J.-C. ; BIGO, S. ; FAURE, J.-P.** Nonlinear cumulated phase as a criterion to assess performance of terrestrial WDM systems. *Proc. OFC'2002,* 365-367